# EUROPÄISCHE PATENTSCHRIFT

(11) **EP 2 232 108 B1**
(45) Veröffentlichungstag und Bekanntmachung des Hinweises auf die Patenterteilung: **13.07.2011**
(21) Anmeldenummer: 09700154.9
(22) Anmeldetag: 06.01.2009
(51) Int. Cl.: F16J 13/12, F16L 55/115, F16L 55/128, F16L 55/132

(54) **VERSCHLUSSEINRICHTUNG ZUM DICHTEN VERSCHLIESSEN EINES FÜLL- UND ENTLEERUNGSSYSTEMS VON EISENBAHNKESSELWAGEN ODER TRANSPORTTANKS**
CLOSURE DEVICE FOR TIGHTLY CLOSING A FILLING AND EMPTYING SYSTEM OF RAILWAY TANK CARS OR TRANSPORTATION TANKS
DISPOSITIF DE FERMETURE POUR LA FERMETURE ETANCHE D'UN SYSTEME DE REMPLISSAGE ET DE VIDAGE DE WAGON-CITERNE OU DE CITERNE DE TRANSPORT

(30) Priorität: 08.01.2008 DE 102008003870; 10.06.2008 DE 102008028019
(43) Veröffentlichungstag der Anmeldung: 29.09.2010
(73) Patentinhaber: BAM Bundesanstalt für Materialforschung und -prüfung, 12205 Berlin (DE)
(72) Erfinder: PÖTZSCH, Michael, 12524 Berlin (DE); JOCHEMS, Frank, 10707 Berlin (DE); WERNER, Jan, 12355 Berlin (DE)
(74) Vertreter: Gulde Hengelhaupt Ziebig & Schneider
(86) Internationale Anmeldenummer: PCT/EP2009/050065
(87) Internationale Veröffentlichungsnummer: WO 2009/087141

(56) Entgegenhaltungen:
- BE-A- 700 173
- DE-A1- 3 602 422
- DE-U1- 8 707 904
- GB-A- 771 261
- US-A- 4 303 101

## Beschreibung

Die Erfindung betrifft eine Verschlusseinrichtung zum dichten Verschließen eines Rohrstutzens eines Füll- und Entleerungssystems von Eisenbahnkesselwagen, ein die Verschlusseinrichtung aufweisendes Füll- und Entleerungssystem von Eisenbahnkesselwagen und ein Verfahren zum Bedienen der Verschlusseinrichtung.

Diversen Untersuchungsberichten und Statistiken aus den behördlichen Gefahrgutkontrollen zufolge existieren in der Praxis entgegen Anforderungen der Gefahrguttransportvorschriften und auch entgegen begleitenden Vorschriften Undichtigkeiten an den Eisenbahnkesselwagen in Form von Tropfleckagen. Die Tropfleckagen entstehen in den meisten Fällen durch Restmengen im Füll- und Entleerungssystem der Kesselwagen in Verbindung mit unzureichend verschlossenen Verschlusseinrichtungen.

Die zumeist als Schraubkappen ausgeführten Verschlüsse von Eisenbahnkesselwagen bzw. Transporttanks stellen eine zusätzlich zu einer ersten und zweiten vorhandenen Verschlusseinrichtung vorgesehene Verschlussmaßnahme dar, die am Ende des Rohrstutzens angebracht ist und einen Verlust einer transportierten Flüssigkeit bzw. der im Füll- und Entleerungssystem zurückbleibenden Reste einer Flüssigkeit verhindern soll.

Die Verschlusseinrichtung am Ende eines Rohrstutzens weist konventionell eine Schraubkappe auf, die im aufgeschraubten Zustand mittels einer eingelegten Flachdichtung den als Dichtfläche ausgeführten Abschluss des Rohrstutzens des Ventilgehäuses abdichtet. Die herkömmliche Schraubkappe dichtet die Dichtfläche bzw. den Abschluss eines Rohrstutzens jedoch nur mittels der Flachdichtung ab. Beschädigungen (z.B. Kerben) auf dieser Dichtfläche des Stutzens und schadhafte Flachdichtungen können zu Undichtigkeiten bzw. Tropfleckagen führen. Das europäische Gefahrgutrecht für den Eisenbahnverkehr (RID) fordert u. a. die Dichtheit von Eisenbahnkesselwagen während des Betriebs. Diese ist mit bestehenden technischen Lösungen, wie in vielen Fällen nachgewiesen, nicht zwangsläufig erreichbar.

Es ist bekannt, dass die Form der Innenwandung eines Rohrstutzens zylindrisch, aber auch bei einigen Ausführungen verjüngend zulaufend ausgestaltet sein kann. Eine Schwachstelle besteht nun in den durch Fertigungstoleranzen entstandenen Abweichungen der Innenabmessungen der Rohrstutzen, weil diese Abmessungen bislang funktionell keine sehr hohe Genauigkeit aufzuweisen hatten.

Eine gattungsgemäße Verschlusseinrichtung ist bekannt aus z.B. GB 771,261.

Der Erfindung liegt die Aufgabe zugrunde, eine Verschlusseinrichtung für ein Füll- und Entleerungssystem und ein Verfahren zum Bedienen derselben vorzuschlagen, mit welchen eine Dichtheit des Verschlusses zuverlässig und während der lebenslangen Betriebsdauer des Verschlusses gewährleistet ist. Das Verhindern eines mechanischen Quetschens der Dichtung und eine definierte Dichtheit bei einer leichten Bedienbarkeit der Verschlusskappe sind eine weitere Aufgaben der Erfindung. Die durch Fertigungstoleranzen bedingten Abweichungen der inneren Abmessungen der Rohrstutzenanschlüsse von Füll- und Entleerungsrohrsystemen sollen ferner kompensiert werden.

Die Erfindung geht nach einem vorrichtungsmäßigen Aspekt von einer Verschlusseinrichtung zum dichten Verschließen eines Rohrstutzenanschlusses eines Füll- und Entleerungssystems von Eisenbahnkesselwagen oder Transporttanks aus, die eine vorzugsweise als Schraubkappe ausgeführte Verschlusskappe mit einem an einer Stirnseite des Rohrstutzens in Angriff bringbaren Dichtungselement aufweist. Wenigstens ein an der Verschlusskappe angebautes zusätzliches Dichtungselement ist so ausgestaltet, dass es mit der Innenwand eines Rohrstutzens in einen kraftschlüssigen Eingriff gebracht werden kann. Die Aufgaben der vorliegenden Erfindung werden dadurch gelöst, dass die Verschlusskappe als Schraubkappe ausgestaltet ist, und das an der Verschlusskappe angebaute Dichtungselement wenigstens eine im Wesentlichen ringförmige Dichtung aufweist, die mit der Innenwand des Rohrstutzens in einen kraftschlüssigen Eingriff bringbar ist, wobei die Dichtung auf einen an der Verschlusskappe angeordneten Haltebolzen aufgesteckt ist und mithilfe einer endständig mit dem Haltebolzen verbundenen Druckplatte abgestützt ist, und der Haltebolzen in axialer Richtung gegenüber der Verschlusskappe bewegbar angebracht ist, wobei durch seine Bewegung in Richtung Verschlusskappe die Druckplatte auf die ringförmige Dichtung eine Druckkraft ausübt, welche die ringförmige Dichtung radial nach außen aufwölbt, so dass die Dichtung mit der Innenwandung des Rohrstutzens in einen kraftschlüssigen Eingriff bringbar ist und die Verschiebung des Haltebolzens gegenüber der Verschlusskappe mithilfe einer inneren Gewindeverbindung ausführbar ist, die zwischen dem Haltebolzen und einer Spannvorrichtung ausgebildet ist.

Die ringförmige Dichtung ist wenigstens einteilig ausgeführt und mithilfe der mit dem Haltebolzen fest verbundenen Druckplatte gegen ein Abrutschen von dem Haltebolzen abgestützt.

Der Haltebolzen ist derart an der Verschlusskappe verschiebbar angebaut, dass er in axialer Richtung gegenüber der Verschlusskappe bewegbar ist, wobei durch seine Bewegung in Richtung zur Verschlusskappe hin die Druckplatte auf die ringförmige Dichtung eine Druckkraft ausübt, so dass die ringförmige Dichtung gegen die Innenwandung der Verschlusskappe gedrückt und derart zusammengestaucht und elastisch verformt wird, dass der Durchmesser der ringförmigen Dichtung aufgeweitet und die ringförmige Dichtung mit der Innenwandung des Rohrstutzens in einen kraftschlüssigen Eingriff tritt. Dadurch ist es möglich, dass die im Laufe der Zeit auf der Innenwandung des Rohrstutzens entstehenden Auskerbungen oder Rillen mit dem elastischen Material der Dichtung ausgefüllt werden und eine hohe Dichtheit des Verschlusses dauerhaft erreicht wird.

Die zwischen dem Haltebolzen und einer Spannvorrichtung ausgebildete innere Gewindeverbindung verlangt von dem Benutzer die Aufbringung kleinerer Schließbetätigungskräfte und erlaubt dennoch die Erzielung einer sehr hohen Schließkraft, da die mechanische Übersetzung einer Gewindeverbindung bekannterweise sehr hoch ist.

Gemäß einer bevorzugten Ausgestaltung nach vorliegender Erfindung wirkt das zusätzliche, vorzugsweise ringförmige Dichtungselement auf die Innenwand des Rohrstutzens mit einer vorgegebenen und/oder vorgebbaren Druckkraft ein. Hierdurch kann verhindert werden, dass eine Überbeanspruchung des Verschlusses durch zu hohe Schließkräfte zu seiner Beschädigung und folglich einem Funktionsausfall führt.

Vorzugsweise ist wenigstens der Kontaktbereich des zusätzlichen Dichtungselementes aus einem elastischen Kunststoff, wie Polytetravinylchlorid, Polytetrafluorethylen (PTFE), Polyurethan, Silikon, Gummi, Kautschuk, oder einem anderen Elastomer hergestellt, wodurch auch bei einer unebenen Innenwandung des zu verschließenden Rohrstutzens eine hohe Dichtigkeit erzielt werden kann.

Nach einer weiteren bevorzugten Ausgestaltung der vorliegenden Erfindung ist das zusätzliche Dichtungselement an der Verschlusskappe austauschbar angebaut. Das ermöglicht, nach einer bestimmten Nutzungsdauer oder nach einer Beschädigung, einen Austausch des ausgedienten Dichtungselementes gegen ein neues auszuführen.

Die Innenwand des Rohrstutzens ist gemäß einer weiteren bevorzugten Ausgestaltung vorliegender Erfindung von außen nach innen verjüngt ausgebildet und das an der Verschlusskappe angebrachte Dichtungselement weist eine hierzu korrespondierende verjüngte Außenform auf. Bereits heute weist ein Teil im Umlauf befindendlichen Ventilanordnungen von Eisenbahnkesselwagen solche verjüngt ausgebildeten Innenwandungen auf.

Weil eine wie oben beschrieben sich verjüngende Form des Rohrstutzens einen umfangreichen Austausch vorhandener Rohrstutzen erforderlich macht, ist die Innenwand des Rohrstutzens in einer alternativen bevorzugten Ausgestaltung der vorliegenden Erfindung zylindrisch ausgebildet und das an der Verschlusskappe angebaute Dichtungselement weist eine hierzu korrespondierende, im Wesentlichen zylindrische Außenform auf. Das ermöglicht den Einsatz der erfindungsgemäßen Verschlusseinrichtung in bestehenden Systemen bei zylindrischen Innenwandungen des Rohrstutzens der Ventile, wodurch hohe Investitionskosten vermieden werden.

Des Weiteren ist der Durchmesser der ringförmigen Dichtung vorzugsweise so vorgegeben, dass eine leichte Einführung in die Öffnung des Rohrstutzens und gleichzeitig ein Reibkontakt mit seiner Innenwandung ermöglicht ist. Der Reibkontakt zwischen der ringförmigen Dichtung und der Innenwandung des Rohrstutzens stellt sicher, dass die ringförmige Dichtung gegen eine Verdrehung festgehalten wird, die infolge der angewendeten rotierenden Schließkräfte auftreten kann.

Vorzugsweise ist gemäß noch einer weiteren bevorzugten Ausgestaltung vorliegender Erfindung die Spannvorrichtung in oder an der Verschlusskappe drehbar gelagert. Hierdurch ist die rotierende Betätigung des erfindungsgemäßen zusätzlichen Dichtungselementes von der Rotation der Verschlusskappe entkoppelt, so dass sowohl das konventionelle Dichtmittel in Form einer stirnseitigen Flachdichtung als auch das zusätzliche erfindungsgemäße Dichtungselement unabhängig voneinander wirksam sein können.

Ferner sind in einer nächsten bevorzugten Ausgestaltung der vorliegenden Erfindung auf dem Haltebolzen wenigstens zwei ringförmige Dichtungen hintereinander aufgesteckt sein. Mehrere Dichtungen stellen sicher, dass auch dann noch eine gute Abdichtung erreichbar ist, wenn in der inneren Wandung des Rohrstutzens im Laufe der Zeit Auskerbungen entstanden sind, die in die Länge erstreckt sind, so dass eine Dichtung u. U. von einer solchen länglich ausgebildeten Kerbe überbrückt sein könnte.

Diese vorteilhafte Wirkung kann mithilfe noch einer weiteren bevorzugten Ausgestaltung der vorliegenden Erfindung noch weiter verbessert werden, bei der zwischen diesen zwei benachbarten ringförmigen Dichtungen wenigstens ein vorzugsweise ringförmiger Abstandhalter gleitbar auf dem Haltebolzen angeordnet ist. Der Abstandhalter bewirkt zugleich vorteilhaft auch eine Materialersparnis für die Dichtungen, die dennoch einen größeren Längenabschnitt des Rohrstutzens überdecken.

Nach einem weiteren Aspekt vorliegender Erfindung werden die Aufgaben der Erfindung mithilfe eines Füll- und Entleerungssystems von Eisenbahnkesselwagen bzw. Transporttanks mit einer erfindungsgemäßen Verschlusseinrichtung gemäß der vorstehenden Beschreibung gelöst.

Ein verfahrensmäßiger Aspekt der vorliegenden Erfindung betrifft ein Verfahren zum Betreiben oder Bedienen der Verschlusseinrichtung nach einer der oben beschriebenen Ausgestaltungen in einem Füll- und Entleerungssystem von Eisenbahnkesselwagen bzw. Transporttanks.

Die Aufgaben der vorliegenden Erfindung werden nach diesem verfahrensmäßigen Aspekt dadurch erreicht, dass zum dichten Verschließen des Rohrstutzens nach einer der oben beschriebenen Ausgestaltungen
- die als Schraubkappe ausgeführte Verschlusskappe mit dem angebauten zusätzlichen Dichtungselement in die Öffnung des Rohrstutzens eingeführt und mithilfe der äußeren Gewindeverbindung mit dem Rohrstutzen verschraubt wird,
- durch Rotation der Spannvorrichtung gegenüber der Verschlusskappe mithilfe der inneren Gewindeverbindung der Haltebolzen in die Spannvorrichtung eingezogen wird, insbesondere solange bis eine spürbare Gegenkraft erzeugt wird, wobei diese Gegenkraft durch elastische Verformung der mindestens einteiligen ringförmigen Dichtung erzeugt wird,
und zum Öffnen der Verschlusseinrichtung in umgekehrter Reihenfolge verfahren wird.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1A: eine erste bevorzugte Ausgestaltung einer erfindungsgemäßen Verschlusseinrichtung in einer Längsschnittansicht;
- Figur 1 B: die erfindungsgemäße Verschlusseinrichtung nach Figur 1 in einer perspektivischen Schnittansicht;
- Figur 2: eine Ausgestaltung einer nicht erfindungsgemäßen Verschlusseinrichtung in einer Längsschnittansicht; und
- Figur 3: eine konventionelle Verschlusseinrichtung in einer Längsschnittansicht.

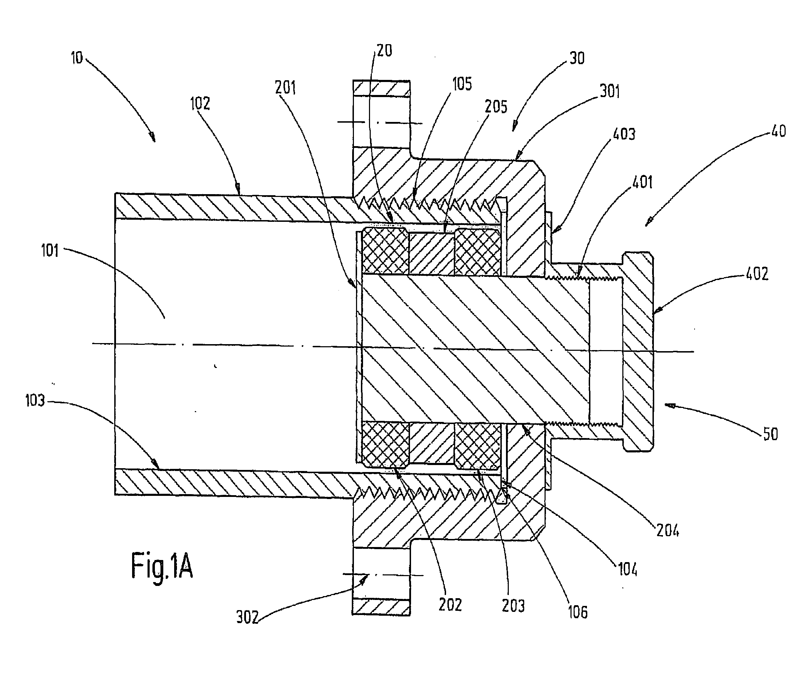

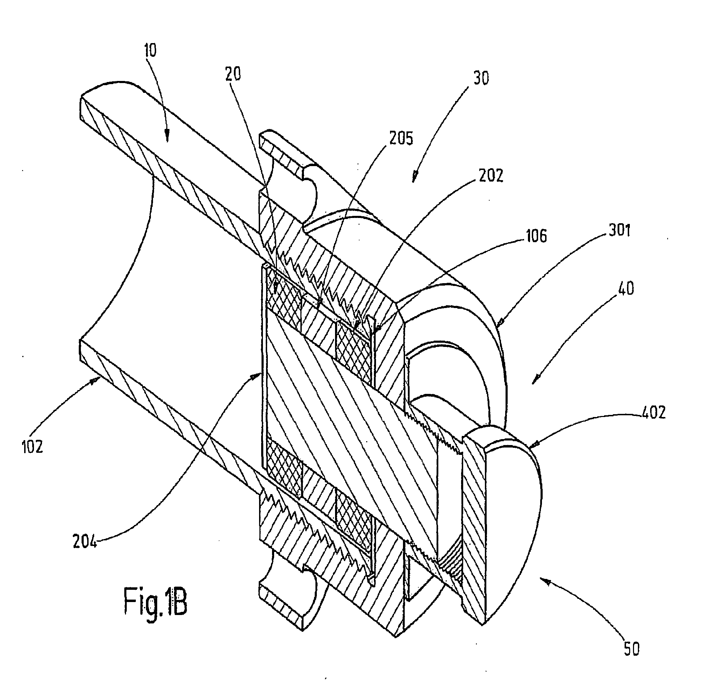

Figuren 1A und 1B zeigen eine erste bevorzugte Ausgestaltung einer insgesamt mit 50 bezeichneten erfindungsgemäßen Verschlusseinrichtung. Die Verschlusseinrichtung 50 weist eine Verschlusskappe 30 auf, die an einem Rohrstutzenanschluss 10, insbesondere an dessen Rohrstutzen 102, eines (nicht dargestellten) Füll- und Entleerungssystems von Eisenbahnkesselwagen oder Transporttanks mithilfe einer Gewindeverbindung 105 aufgeschraubt ist.

Die Verschlusseinrichtung 50 kann eine konventionelle Flachdichtung 106 aufweisen, mit welcher eine Innenwandung der Verschlusskappe 30 an einer Stirnseite 104 des Rohrstutzens 102 abgedichtet werden kann. Alternativ kann die Verschlusseinrichtung 50 ohne eine Flachdichtung 106 verwendet sein.

An einem Gehäuse 301 der Verschlusskappe 30 ist eine Spannvorrichtung 40 drehbar gelagert angebaut, die einen Drehteller 403 und eine Handgriffkappe 402 aufweist. Der Drehteller 403 ermöglicht einerseits eine Zentrierung der Handgriffkappe 402 bezüglich des Gehäuses 301 der Verschlusskappe, die insbesondere als eine Schraubkappe 30 ausgeführt ist, und andererseits eine Rotation dieser beiden Teile. Dabei tritt zwischen dem Drehteller 403 und der Schraubkappe 30 vorzugsweise eine relativ geringe Gleitreibung auf. Die Handgriffkappe 402 ist für eine manuelle Drehbetätigung durch eine bedienende Person vorgesehen und weist in dieser Ausgestaltung eine als ein Innengewinde ausgeführte Gewindeverbindung 401 auf, mit welchem ein mit einem Außengewinde ausgestatteter Haltebolzen 204 verschraubt ist. Dieser Haltebolzen 204 dient als Träger für das hierbei zweiteilig ausgeführte Dichtungselement 20, welches vorzugsweise zwei ringförmige Dichtungen 202 und 203 aufweist. Die ringförmigen Dichtungen 202 und 203 sind auf den Haltebolzen 204 vorzugsweise aufgesteckt und ein Abstandhalter 205 ist zwischen ihnen gleitbar auf dem Haltebolzen 204 angeordnet.

Der dargestellte Zustand der Verschlusseinrichtung oder Verschlusses 50 ist in einem noch nicht gespannten Zustand der Spannvorrichtung 40 gezeigt, nachdem der Haltebolzen 204 mit den auf ihm aufgesteckten ringförmigen Dichtungen 202, 203 in eine Öffnung 101 des Rohrstutzens 102 eingeführt und dabei das Gehäuse 301 der Schraubkappe 30 mithilfe der Gewindeverbindung 105 auf den Rohrstutzen 102 aufgeschraubt worden ist. Damit der Haltebolzen 204 mit den darauf aufgesteckten ringförmigen Dichtungen 202, 203 nicht mit der Handgriffkappe 402 - beispielsweise durch infolge einer Verunreinigung erhöhte Gewinde-Reibkräfte - mitgedreht wird, ist der Durchmesser der ringförmigen Dichtungen 202, 203 so gewählt, dass die Dichtungen bereits im ungespannten Zustand in eine reibschlüssige Verbindung mit der Innenwandung 103 des Rohrstutzens 102 treten. Der in der Figur 1 dargestellte Spalt zwischen der Innenwandung des Rohrstutzens 102 und den Dichtungen 202, 203 dient lediglich der besseren Darstellung und ist tatsächlich nicht vorhanden. Dadurch bleibt der Haltebolzen 204 beim manuellen Verdrehen der Handgriffkappe 402 ungedreht, die dadurch zusammengedrückten ringförmigen Dichtungen 202, 203 drücken noch fester gegen die Innenwandung 103 des Rohrstutzens 102 und die Abdichtung kann somit mit zunehmenden Reib- und Druckkräften sehr dicht gemacht werden.

Zum Verschließen des Verschlusses 50 muss die Spannvorrichtung 40 dabei manuell in Rotation in Schließrichtung versetzt werden, so dass der Haltebolzen 204 in den Hohlraum der Handgriffkappe 402 durch die Übersetzung der Gewindeverbindung 401 eingezogen wird. Hierdurch übt eine endständig an dem Haltebolzen 204 angeordnete Druckplatte 201 eine Druckkraft auf die erste ringförmige Dichtung 202 aus, die ihrerseits diese Druckkraft weiter auf den Abstandhalter 205 überträgt, welcher selbst gleitend auf dem Haltebolzen 204 den so erhaltenen Schub auf die zweite ringförmige Dichtung 203 überträgt. Durch die so ausgeübte Druckkraft werden die beiden ringförmigen Dichtungen 202 und 203 gestaucht, wodurch ihre Außenseiten ausgewölbt werden und gegen die Innenwand 103 des Rohrstutzens 102 mit einer bestimmten Kraft angreifen. Der Betrag dieser Kraft kann konstruktionsbedingt derart eingeschränkt sein, dass eine Bedienperson eine recht hohe Gegenkraft verspüren kann, bevor beispielsweise die Gewindeverbindung 401 überbeansprucht wird.

Durch die elastische Verformung der ringförmigen Dichtungen 202 und 203, die aus einem Elastomer hergestellt sind, entsteht eine kraftschlüssige und daher eine höchst dichte Verbindung zwischen der Innenwand 103 des Rohrstutzens 102 und den Dichtungen. Die Dichtungen 202, 203 sind gleichzeitig durch die gleichen Druckkräfte auch gegenüber dem Haltebolzen 204 abgedichtet, welchen sie kraftschlüssig umgreifen. Dabei können kleine Dellen in der Innenwandung 103 des Rohrstutzens 102, die im Laufe seiner Nutzungszeit vorkommen können, durch das elastische Material der einen oder beider ringförmiger Dichtungen 202, 203 ausgeglichen werden. Dabei wird die Wahrscheinlichkeit, dass eine zu große Delle die Dichtfunktion einer der beiden ringförmigen Dichtungen dadurch verringert, dass die Dichtungen 202, 203 mehrfach eingesetzt sind und dass zwischen ihnen durch den Abstandhalter 205 ein Abstand geschaffen ist.

Zum Öffnen des Verschlusses bzw. der Verschlusseinrichtung 50 muss in umgekehrter Reihenfolge verfahren werden, d. h. als erstes die Spannvorrichtung 40 durch manuelle Rotation der Handgriffkappe 402 in der Öffnungsrichtung entspannt werden. Erst danach kann das Gehäuse 301 der Schraubkappe 30 in gewohnter Weise abgeschraubt werden.

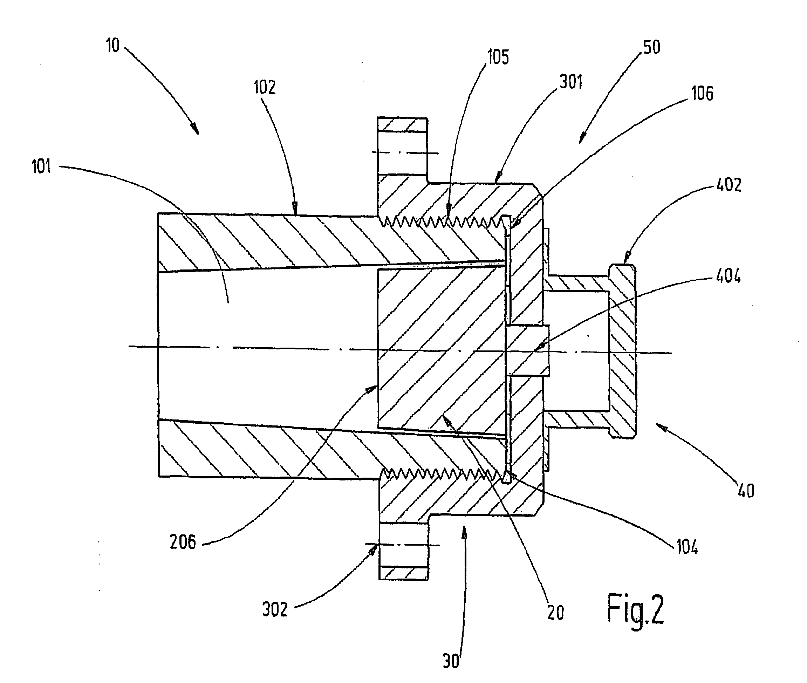

Figur 2 zeigt eine Ausgestaltung eines nicht erfindungsgemäßen Verschlusses 50, wobei gleiche Elemente mit den gleichen Bezugszeichen bezeichnet sind und nicht noch einmal im Einzelnen erläutert werden. Es handelt sich umeine gegenüber der Ausführung in Figur 1 vereinfachte Lösung, die mit weniger Teilen auskommt und daher preiswerter herstellbar ist.

Das Dichtungselement 20 weist einen hierbei einteilig ausgeführten Stopfen 206 auf, der aus einem Elastomer hergestellt ist. Dieser elastische Stopfen 206 verfügt vorzugsweise über eine in die Länge möglichst ausgedehnte Abmessung, damit er eine größere, kraftschlüssig angreifende Angriffsfläche ausbildet. Diese Angriffsfläche wirkt lediglich durch die Vorspannkraft des elastischen Stopfens 206, welcher hierzu einen geringfügig größeren Durchmesser aufweist als der Innendurchmesser des Rohrstutzens 102. Der Stopfen 206 wird zum Verschließen des Verschlusses 50 zunächst manuell in die Öffnung 101 des Rohrstutzens 102 eingeführt, wobei zwecks leichteren Einführens der Durchmesser des Stopfens 206 an seinem Ende etwas kleiner gewählt sein kann. Bei weiterem Einführen oder Einstecken des Stopfens 206 in den Rohrstutzen 102 erreicht die innere Gewindeverbindung 105 der Schraubkappe 30 die äußere Gewindeverbindung des Rohrstutzens 102 und die bedienende Person kann nun durch Aufschrauben und Rotieren der Schraubkappe 30 den Stopfen 206 auch unter größerer Kraftwirkung bis zum Gewindeanschlag einführen.

Der Stopfen 206 muss hierbei nicht mit der Schraubkappe 30 mitgedreht werden, sondern rotiert frei gegenüber dieser, weshalb der Stopfen 206 mithilfe einer Rotationsachse 404 an der Schraubkappe 30 drehbar gelagert ist.

Zwei vorteilhafte, unterschiedliche Ausgestaltungen dieser Variante sind vorgesehen. In der in Figur 2 dargestellten Variante weist die Öffnung 101 des Rohrstutzens 102 eine konisch zulaufende, sich verjüngende Innenwandung 103 auf, wodurch der Stopfen 206 einen besonders kraftschlüssigen Kontakt mit dieser Innenwandung erreichen kann. Nachteilig ist jedoch, dass ein Austausch eines konventionellen Rohrstutzens gegen einen neuen mit verjüngter Innenwandung erfolgen muss, sofern diese Rohrstutzenkonstruktion nicht vorhanden ist, was einen erhöhten Kostenaufwand mit sich bringt. Ein Teil bereits heute verwendeter Ventile weist jedoch bereits eine sich in dieser Form verjüngte Innenwandung auf, so dass für diese Fälle die dargestellte Lösung direkt anwendbar ist.

Die alternative Ausgestaltung sieht vor, den gebräuchlicheren Rohrstutzen 102 mit zylindrischer Öffnung 101 zu verwenden, d. h. den Stopfen 206 in die zylindrische Öffnung 101 einzuführen. Die Dichtheit wird hierbei lediglich durch die mithilfe des elastischen Materials des Stopfens 206 vorgegebene Vorspannkraft erreicht, ähnlich wie bei einem Flaschenkorken.

Die Handgriffkappe 402 ist mit der Schraubkappe 30 in dieser Ausgestaltung fest verbunden und dient mit ihrem kleineren Durchmesser einem leichteren manuellen Rotieren der Schraubkappe 30.

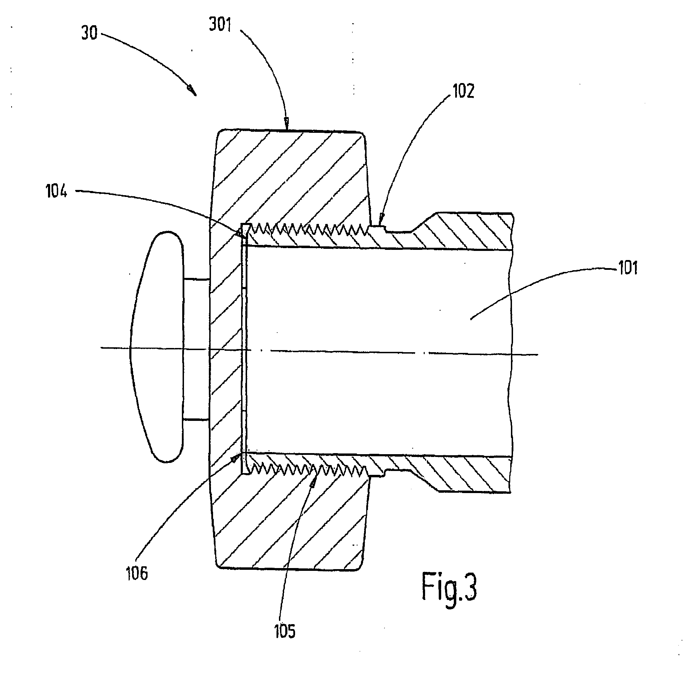

Figur 3 zeigt anschaulich eine konventionelle Verschlusseinrichtung mit einer konventionellen Verschlusskappe oder Schraubkappe 30 mit einer Flachdichtung 106. Diese konventionelle Lösung weist ein flaches Dichtmittel 106 auf, welches zwischen der Stirnseite 104 des Rohrstutzens 102 und der flachen Innenwandung der Verschlusskappe 30 mithilfe der Gewindeverbindung 105 kraftschlüssig in Anstoß gebracht ist. Die Handgriffkappe 402 wird zum schnelleren Rotieren der Schraubkappe 30 verwendet, während ein größeres Schließ- oder Öffnungs-Drehmoment durch Drehen an der Außenfläche der Schraubkappe mit ihrem größeren Durchmesser erzeugt werden kann. Diese konventionelle Abdichtung unterliegt den oben beschriebenen Verschleißerscheinungen, die zu Undichtigkeiten führen.

Die vorangehenden Ausführungen der vorliegenden Erfindung sind lediglich beispielhaft und nicht als die vorliegende Erfindung einschränkend auszulegen. Die vorliegende Erfindungslehre kann leicht auf andere Anwendungen übertragen werden. Die Beschreibung der Ausführungsbeispiele ist zur Veranschaulichung vorgesehen und nicht, um den Schutzbereich der Patentansprüche einzuschränken. Viele Alternativen, Modifikationen und Varianten sind für einen durchschnittlichen Fachmann offensichtlich, ohne dass er hierfür den Schutzumfang der vorliegenden Erfindung verlassen müsste, der in den nachfolgenden Ansprüchen definiert ist.

### BEZUGSZEICHENLISTE

- 10: Rohrstutzenanschluss
- 101: Öffnung
- 102: Rohrstutzen
- 103: Innenwand, Innenwandung
- 104: Stirnseite
- 105: äußere Gewindeverbindung
- 106: Dichtmittel, Flachdichtung
- 20: Dichtungselement
- 201: Druckplatte
- 202, 203: ringförmige Dichtung
- 204: Haltebolzen
- 205: Abstandhalter
- 206: Dichtungselement, Stopfen
- 30: Verschlusskappe / Schraubkappe
- 301: Gehäuse der Verschlusskappe
- 302: Befestigungs-Öse, Bohrung
- 40: Spannvorrichtung
- 401: innere Gewindeverbindung
- 402: Handgriffkappe
- 403: Drehteller
- 404: Rotationsachse
- 50: Verschlusseinrichtung, Verschluss

## Patentansprüche

1. Verschlusseinrichtung (50) zum dichten Verschließen eines Rohrstutzens (102) eines Füll- und Entleerungssystems von Eisenbahnkesselwagen oder Transporttanks, wobei die Verschlusseinrichtung (50) eine Verschlusskappe (30) mit einem an einer Stirnseite (104) des Rohrstutzens (102) in Angriff bringbaren Dichtmittel (106) aufweist, wobei die Verschlusskappe (30) als Schraubkappe ausgestaltet ist, **gekennzeichnet durch**
wenigstens ein an der Verschlusskappe (30) angeordnetes zusätzliches Dichtungselement (20), das mit einer Innenwand (103) des Rohrstutzens (102) in einen kraftschlüssigen Eingriff bringbar ist, und das an der Verschlusskappe (30) angebaute Dichtungselement (20) wenigstens eine im Wesentlichen ringförmige Dichtung (202, 203) aufweist, die mit der Innenwand (103) des Rohrstutzens (102) in einen kraftschlüssigen Eingriff bringbar ist, wobei die Dichtung (202, 203) auf einen an der Verschlusskappe (30) angeordneten Haltebolzen (204) aufgesteckt ist und mithilfe einer endständig mit dem Haltebolzen (204) verbundenen Druckplatte (201) abgestützt ist,
und der Haltebolzen (204) in axialer Richtung gegenüber der Verschlusskappe (30) bewegbar angebracht ist, wobei **durch** seine Bewegung in Richtung Verschlusskappe (30) die Druckplatte (201) auf die ringförmige Dichtung (202, 203) eine Druckkraft ausübt, welche die ringförmige Dichtung (202, 203) radial nach außen aufwölbt, so dass die Dichtung (202, 203) mit der Innenwandung (103) des Rohrstutzens (102) in einen kraftschlüssigen Eingriff bringbar ist und die Verschiebung des Haltebolzens (204) gegenüber der Verschlusskappe (30) mithilfe einer inneren Gewindeverbindung (401) ausführbar ist, die zwischen dem Haltebolzen (204) und einer Spannvorrichtung (40) ausgebildet ist.

2. Verschlusseinrichtung nach Anspruch 1,
**dadurch gekennzeichnet, dass**
das zusätzliche Dichtungselement (20) ausgebildet ist, auf die Innenwand (103) des Rohrstutzens (102) mit einer vorgegebenen und/oder vorgebbaren Druckkraft einzuwirken.

3. Verschlusseinrichtung nach einem der vorhergehenden Ansprüche,
**dadurch gekennzeichnet, dass**
das zusätzliche Dichtungselement (20) wenigstens in seinem Kontaktbereich aus einem elastischen Material hergestellt ist, insbesondere einem elastischen Kunststoff, umfassend Polyurethan, Silikon, Kautschuk, Polytetravinylchlorid und Polytetrafluorethylen.

4. Verschlusseinrichtung nach einem der vorhergehenden Ansprüche,
**dadurch gekennzeichnet, dass**
das zusätzliche Dichtungselement (20) an der Verschlusskappe (30) austauschbar angebracht ist.

5. Verschlusseinrichtung nach einem der vorhergehenden Ansprüche,
**dadurch gekennzeichnet, dass**
die Spannvorrichtung (40) in oder an der Verschlusskappe (30) drehbar gelagert ist.

6. Verschlusseinrichtung nach einem der vorhergehenden Ansprüche,
**dadurch gekennzeichnet, dass**
auf dem Haltebolzen (204) wenigstens zwei ringförmige Dichtungen (202, 203) aufgesteckt sind.

7. Verschlusseinrichtung nach Anspruch 6,
**dadurch gekennzeichnet, dass**
zwischen zwei benachbarten ringförmigen Dichtungen (202, 203) wenigstens ein Abstandhalter (205) gleitbar auf dem Haltebolzen (204) angeordnet ist.

8. Füll- und Entleerungssystem von Eisenbahnkesselwagen oder Transporttanks mit einer Verschlusseinrichtung (50) nach einem der Ansprüche 1 bis 7.

9. Füll- und Entleerungssystem nach Anspruch 8,
**dadurch gekennzeichnet, dass**
die Innenwand (103) des Rohrstutzens (102) von außen nach innen verjüngt ausgebildet ist und das an der Verschlusskappe (30) angebaute Dichtungselement (206) eine hierzu korrespondierende Außenform aufweist.

10. Füll- und Entleerungssystem nach Anspruch 8,
**dadurch gekennzeichnet, dass**
die Innenwand (103) des Rohrstutzens (102) zylindrisch ausgebildet ist und das an der Verschlusskappe (30) angebaute Dichtungselement (206) eine hierzu korrespondierende im Wesentlichen zylindrische Außenform aufweist.

11. Verfahren zum Bedienen der Verschlusseinrichtung (50) nach wenigstens einem der Ansprüche 1 bis 7 in einem Füll- und Entleerungssystem von Eisenbahnkesselwagen bzw. Transporttanks,
**dadurch gekennzeichnet, dass**
zum Verschließen des Rohrstutzens (102)
- die Verschlusskappe (30) mit dem angebauten zusätzlichen Dichtungselement (20) in die Öffnung (101) des Rohrstutzens (102) eingeführt und mithilfe der äußeren Gewindeverbindung (105) mit dem Rohrstutzen (102) verschraubt wird,
- durch eine Rotation der Spannvorrichtung (40) gegenüber der Verschlusskappe (30) mithilfe der inneren Gewindeverbindung (401) der Halterbolzen (204) in die Spannvorrichtung (40) eingezogen wird, solange bis eine spürbare Gegenkraft erzeugt wird, wobei diese Gegenkraft durch elastische Verformung der mindestens einteiligen ringförmigen Dichtung (202, 203) erzeugt wird,
und zum Öffnen der Verschlusseinrichtung in umgekehrter Reihenfolge verfahren wird.

## Claims

1. Closure device (50) for tightly closing a pipe connection piece (102) of a filling and emptying system of rail tank cars or transportation tanks, wherein the closure device (50) comprises a closure cap (30) having a sealing means (106) which can be applied against an end side (104) of the pipe connection piece (102), wherein the closure cap (30) is designed as a screw cap, **characterised by**
at least one additional sealing element (20) which is disposed on the closure cap (30) and can be brought into non-positive engagement with an inner wall (103) of the pipe connection piece (102),
and the sealing element (20) mounted on the closure cap (30) comprises at least one substantially annular seal (202, 203) which can be brought into non-positive engagement with the inner wall (103) of the pipe connection piece (102), wherein the seal (202, 203) is placed onto a holding bolt (204) disposed on the closure cap (30) and is supported by means of a pressure plate (201) connected on the terminal side to the holding bolt (204), and the holding bolt (204) is mounted so as to be able to move with respect to the closure cap (30) in the axial direction, wherein owing to its movement in the direction of the closure cap (30), the pressure plate (201) exerts a pressing force on the annular seal (202, 203), which force causes the annular seal (202, 203) to bulge radially outwards so that the seal (202, 203) can be brought into non-positive engagement with the inner wall (103) of the pipe connection piece (102) and the displacement of the holding bolt (204) with respect to the closure cap (20) can be effected by means of an inner threaded connection (401) which is formed between the holding bolt (204) and a clamping device (40).

2. Closure device as claimed in Claim 1, **characterised in that** the additional sealing element (20) is formed to exert a predetermined and/or predeterminable pressing force on the inner wall (103) of the pipe connection piece (102).

3. Closure device as claimed in any one of the preceding Claims, **characterised in that** at least in its contact region, the additional sealing element (20) is produced from a resilient material, in particular a resilient synthetic material, including polyurethane, silicone, rubber, polytetravinylchloride and polytetrafluoroethylene.

4. Closure device as claimed in any one of the preceding Claims, **characterised in that** the additional sealing element (20) is mounted on the closure cap (30) in a replaceable manner.

5. Closure device as claimed in any one of the preceding Claims, **characterised in that** the clamping device (40) is rotatably mounted in or on the closure cap (30).

6. Closure device as claimed in any one of the preceding Claims, **characterised in that** at least two annular seals (202, 203) are placed onto the holding bolt (204).

7. Closure device as claimed in Claim 6, **characterised in that** at least one spacer element (205) is disposed between two adjacent annular seals (202, 203) so as to be able to slide on the holding bolt (204).

8. Filling and emptying system of rail tank cars or transportation tanks having a closure device (50) as claimed in any one of Claims 1 to 7.

9. Filling and emptying system as claimed in Claim 8, **characterised in that** the inner wall (103) of the pipe connection piece (102) is formed to taper from the outside towards the inside and the sealing element (206) mounted on the closure cap (30) has an outer shape corresponding thereto.

10. Filling and emptying system as claimed in Claim 8, **characterised in that** the inner wall (103) of the pipe connection piece (102) is formed cylindrically and the sealing element (206) mounted on the closure cap (30) has a substantially cylindrical outer shape corresponding thereto.

11. Method for operating a closure device (50) as claimed in any one of Claims 1 to 7 in a filling and emptying system of rail tank cars or transportation tanks, **characterised in that** in order to close the pipe connection piece (102)
- the closure cap (30) having the mounted additional sealing element (20) is inserted into the opening (101) of the pipe connection piece (102) and is screwed to the pipe connection piece (102) by means of the outer threaded connection (105),
- by way of rotation of the clamping device (40) with respect to the closure cap (30), the holding bolt (204) is pulled into the clamping device (40) by means of the inner threaded connection (401) until a noticeable counter force is produced, wherein this counter force is produced by resilient deformation of the annular seal (202, 203) formed from at least one piece,
and in order to open the closure device, the sequence is performed in the reverse direction.

## Revendications

1. Dispositif de fermeture (50) pour la fermeture étanche d'une tubulure (102) d'un système de remplissage et de vidage de wagon-citerne ou de citerne de transport, le dispositif de fermeture (50) présentant un bouchon de fermeture (30) comportant des moyens d'étanchéité (106) pouvant venir en prise sur une face terminale (104) de la tubulure (102), le bouchon de fermeture (30) étant conçu comme un bouchon fileté, **caractérisé par**
au moins un élément d'étanchéité supplémentaire (20) disposé au niveau du bouchon de fermeture (30), qui peut être amené en prise, par ajustement serré, avec une paroi intérieure (103) de la tubulure (102), et l'élément d'étanchéité (20) rapporté sur le bouchon de fermeture (30) présente au moins un joint essentiellement annulaire (202, 203), qui peut être amené en prise, par ajustement serré, avec une paroi intérieure (103) de la tubulure (102), le joint (202, 203) étant engagé sur un boulon d'arrêt (204) disposé sur le bouchon de fermeture (30) et prenant appui à l'aide d'une plaque de pression (201) reliée en position terminale au boulon d'arrêt (204),
et le boulon d'arrêt (204) étant monté mobile dans une direction axiale par rapport au bouchon de fermeture (30), la plaque de pression (201) exerçant par son mouvement dans la direction du bouchon de fermeture (30) une force de pression sur le joint annulaire (202, 203), qui bombe le joint annulaire (202, 203) radialement vers l'extérieur, de telle sorte que le joint (202, 203) peut être amené en prise, par ajustement serré, avec la paroi intérieure (103) de la tubulure (102) et le déplacement de l'écrou d'arrêt (204) par rapport au bouchon de fermeture (30) peut être réalisé par l'intermédiaire d'un raccord fileté intérieur (401) formé entre l'écrou d'arrêt (204) et un dispositif de tension (40).

2. Dispositif de fermeture selon la revendication 1, **caractérisé par le fait que** l'élément d'étanchéité (20) supplémentaire est formé pour agir sur la paroi intérieure (103) de la tubulure (102) avec une force de pression prédéterminée et/ou prédéfinissable.

3. Dispositif de fermeture selon l'une des revendications précédentes, **caractérisé par le fait que** l'élément d'étanchéité supplémentaire (20) est fabriqué au moins dans sa zone de contact en un matériau élastique, en particulier en matière plastique élastique, comprenant du polyuréthane, du silicone, du caoutchouc, du polytétrachlorure de vinyle et du polytétrafluoréthylène.

4. Dispositif de fermeture selon l'une des revendications précédentes, **caractérisé par le fait que** l'élément d'étanchéité supplémentaire (20) est fixé au bouchon de fermeture (30) de manière à pouvoir être remplacé.

5. Dispositif de fermeture selon l'une des revendications précédentes, **caractérisé par le fait que** le dispositif de tension (40) dans ou au niveau du bouchon de fermeture (30) est monté rotatif.

6. Dispositif de fermeture selon l'une des revendications précédentes, **caractérisé par le fait qu'**au moins deux joints annulaires (202, 203) sont engagés sur le boulon d'arrêt (204).

7. Dispositif de fermeture selon la revendication 6, **caractérisé par le fait qu'**au moins un élément d'écartement (205) est disposé coulissant sur l'écrou d'arrêt (204) entre deux joints annulaires adjacents (202, 203).

8. Système de remplissage et de vidage de wagon-citerne ou de citerne de transport doté d'un dispositif de fermeture (50) selon une des revendications 1 à 7.

9. Système de remplissage et de vidage selon la revendication 8, **caractérisé par le fait que** la paroi intérieure (103) de la tubulure (102) est formée se rétrécissant de l'extérieur vers l'intérieur et l'élément d'étanchéité (206) rapporté sur le bouchon de fermeture (30) présente une forme extérieure y correspondant.

10. Système de remplissage et de vidage selon la revendication 8, **caractérisé par le fait que** la paroi intérieure (103) de la tubulure (1172) est formée de manière cylindrique et l'élément d'étanchéité (206) rapporté sur le bouchon de fermeture (30) présente une forme essentiellement cylindrique y correspondant.

11. Procédé d'actionnement du dispositif de fermeture (50) selon au moins une des revendications 1 à 7 dans un système de remplissage et de vidage de wagon-citerne ou de citerne de transport, **caractérisé par le fait que**
pour fermer la tubulure (102)
- le bouchon de fermeture (30) est introduit avec l'élément d'étanchéité supplémentaire rapporté (20) dans l'ouverture (101) de la tubulure (102) et vissé à la tubulure (102) par l'intermédiaire du raccord fileté extérieur (105),
- par rotation du système de tension (40) par rapport au bouchon de fermeture (30) par l'intermédiaire du raccord fileté intérieur, le boulon d'arrêt (401) est enfoncé dans ce système de tension (40), jusqu'à ce qu'une force antagoniste sensible soit exercée, ladite force antagoniste étant générée par déformation élastique d'au moins un joint annulaire en une seule pièce (202, 203),
et que, pour ouvrir le dispositif de fermeture, il est procédé dans l'ordre inverse.
